(19) Europäisches Patentamt / European Patent Office / Office européen des brevets

(11) **EP 4 451 017 B1**

(12) **FASCICULE DE BREVET EUROPEEN**

(45) Date de publication et mention
de la délivrance du brevet:
**24.09.2025 Bulletin 2025/39**

(21) Numéro de dépôt: **24171050.8**

(22) Date de dépôt: **18.04.2024**

(51) Classification Internationale des Brevets (IPC):
**G01S 19/42** *(2010.01)* **G01S 19/43** *(2010.01)*
**G01S 19/52** *(2010.01)*

(52) Classification Coopérative des Brevets (CPC):
**G01S 19/42; G01S 19/43; G01S 19/52;**
G01S 19/428

(54) **MÉTHODE DE LOCALISATION GNSS ASSISTÉE PAR UN MODÈLE D'INTELLIGENCE ARTIFICIELLE**

KÜNSTLICHE-INTELLIGENZ-MODELLGESTÜTZTES VERFAHREN ZUR GNSS-LOKALISIERUNG

METHOD FOR GNSS LOCALIZATION ASSISTED BY AN ARTIFICIAL INTELLIGENCE MODEL

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **21.04.2023 FR 2304055**

(43) Date de publication de la demande:
**23.10.2024 Bulletin 2024/43**

(73) Titulaire: **Commissariat à l'Energie Atomique et
aux Energies
Alternatives
75015 Paris (FR)**

(72) Inventeurs:
• **SBEITY, Ibrahim
38054 GRENOBLE CEDEX 09 (FR)**
• **VILLIEN, Christophe
38054 GRENOBLE CEDEX 09 (FR)**

(74) Mandataire: **Atout PI Laplace
Immeuble Up On
25 Boulevard Romain Rolland
CS 40072
75685 Paris Cedex 14 (FR)**

(56) Documents cités:
**US-A1- 2023 057 518**

• SUZUKI TARO ET AL: "NLOS Multipath Detection
using Convolutional Neural Network", GNSS
2020 - PROCEEDINGS OF THE 33RD
INTERNATIONAL TECHNICAL MEETING OF THE
SATELLITE DIVISION OF THE INSTITUTE OF
NAVIGATION (ION GNSS+ 2020), THE INSTITUTE
OF NAVIGATION, 8551 RIXLEW LANE SUITE 360
MANASSAS, VA 20109, USA, 25 September 2020
(2020-09-25), pages 2989 - 3000, XP056016217

**Description**

L'invention concerne le domaine des systèmes de positionnement et navigation par satellite connus sous l'acronyme systèmes GNSS (Global Navigation Satellite System).

L'invention concerne plus précisément une méthode de localisation d'un système GNSS, assistée par un modèle d'intelligence artificielle.

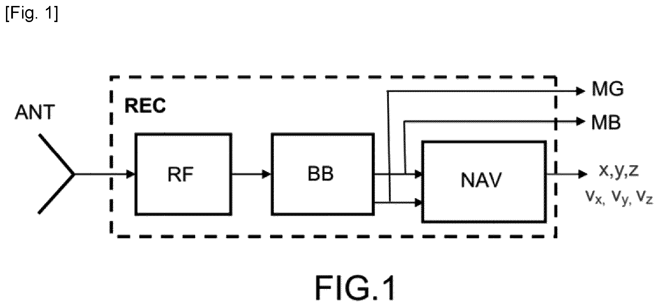

La figure 1 représente un schéma d'une architecture d'un récepteur GNSS selon l'art antérieur. Un tel récepteur REC a pour fonction d'acquérir et traiter des signaux de radionavigation par satellite ou signaux GNSS transmis par des satellites d'une ou plusieurs constellations parmi les constellations existantes GPS, Glonass, Galileo ou encore Beidou. Les signaux sont transmis dans une ou plusieurs bandes de fréquences, par exemple les bandes L1, L2 ou L5.

Le récepteur REC comprend une antenne ANT, un étage d'entrée radiofréquence RF qui assure l'amplification, le filtrage, la transposition en fréquence et la numérisation des signaux analogiques reçus par l'antenne ANT. Il comprend également un étage BB de traitement en bande de base permettant l'acquisition des signaux, leur démodulation, l'extraction des données contenues dans les signaux pour générer des messages GNSS MG et des mesures brutes relatives à ces signaux MB. Le récepteur REC comprend enfin un processeur de navigation NAV configuré pour réaliser un calcul d'une solution de positionnement PVT qui comprend une information de positionnement du récepteur et/ou une information de vitesse de déplacement du récepteur et/ou une information de temps, c'est-à-dire l'horloge du récepteur par rapport à celle de la constellation des satellites.

Plus précisément, l'étage de traitement en bande de base BB fournit au processeur de navigation NAV au moins les éléments suivants :

- Les mesures brutes MB contenant au moins l'une des mesures suivantes: les mesures de pseudo-distances, les mesures Doppler ou taux de pseudo-distance, les mesures de phase des ondes porteuses du signal GNSS et les instants de réception des signaux GNSS. Il peut également fournir des indicateurs de qualité de lien tels que le rapport signal-à-bruit (C/N0),
- Les messages GNSS MG contenant au moins : les éphémérides ou paramètres permettant d'estimer les positions et vitesses des satellites ; les paramètres de corrections d'erreurs d'horloge des satellites ; des éléments caractérisant l'état des satellites et l'état de leurs mesures, les paramètres d'un modèle d'estimation des délais ionosphériques.

La publication Suzuki Taro et al.: "NLOS Multipath Detection using Convolutional Neural Network", proceedings of the 33rd International Technical Meeting of the Satellite Division of the Institute of Navigation (ION GNSS+ 2020), September 22-25, 2020, 2989-3000 présente une méthode d'apprentissage d'un modèle d'intelligence artificielle de l'art antérieur, le modèle étant destiné à être utilisé pour déterminer une information de localisation d'un récepteur GNSS.

L'invention concerne la mise en œuvre du processeur de navigation NAV et plus précisément l'algorithme permettant d'estimer les informations de positionnement PVT.

Le processeur de navigation NAV reçoit en entrée les mesures brutes MB et les messages GNSS MG et produit, typiquement, pour chacun des satellites pour lequel un signal est reçu des informations parmi : une mesure de pseudo-distance, une mesure de phase de porteuse, une mesure de décalage Doppler.

Les mesures de pseudo-distance ou de phase peuvent être utilisées pour déterminer la position ainsi que le décalage d'horloge du récepteur, tandis que la mesure de décalage Doppler est utilisée pour la détermination de la vitesse et de la dérive d'horloge du récepteur.

Par exemple, si l'on considère une mesure de pseudo-distance $\rho_i$ entre un récepteur de coordonnées $x, y, z$ et un satellite SVi de coordonnées $x_i, y_i, z_i$, cette mesure respecte la relation suivante :

$$\rho_i = d_i(x, y, z) + \delta + \varepsilon_i \qquad \boxed{2.1}$$

Où $d_i$ est la distance géométrique entre le récepteur et le satellite SVi,

$$d_i(x,y,z) = \sqrt{(x - x_i)^2 + (y - y_i)^2 + (z - z_i)^2} \qquad \boxed{2.2}$$

$\delta$ est un décalage de distance résultant d'un décalage d'horloge $\varDelta t$ entre le récepteur et la constellation (tous les satellites appartenant à une même constellation GNSS étant parfaitement synchronisés, le décalage est le même pour tous les satellites de la constellation) converti en mètres en le multipliant avec la vitesse de la lumière c

$$\delta = \Delta t \, .c \qquad \boldsymbol{2.3}$$

$\varepsilon_i$ est une erreur de mesure causée par de multiples phénomènes tels que :

- le bruit de mesure du récepteur, de l'ordre de quelques cm à quelques mètres,

- des retards de propagation dans l'ionosphère et la troposphère, de l'ordre de quelques cm à quelques mètres,

- des erreurs de position des satellites,

- des effets liés à la propagation du signal.

Le fonctionnement du système GNSS est tel que les observations en provenance de différents satellites sont collectées simultanément au cours d'une période de temps appelée « *époque* » (*epoch* = transmissions simultanées des signaux satellitaires) à l'issue de laquelle un ensemble de mesures $\{\rho_i\}$ est collectée.
Le calcul de la solution de position (*x, y, z,* $\delta$) dépend du mode de fonctionnement du récepteur. On distingue en effet un mode de poursuite et un mode dit "single-epoch".
Le mode de poursuite est un mode de fonctionnement du récepteur pour lequel une solution a déjà été calculée lors d'une époque précédente *k*-1. Dans ce cas, la solution à l'instant *k* est obtenue par la mise à jour de la solution *k*-1 en utilisant les mesures collectées lors de l'époque *k*. Ce calcul est généralement effectué par un filtre de Kalman ou l'un de ses nombreux dérivés (EKF, UKF, etc.).
Le mode dit « single-epoch » est un mode de fonctionnement du récepteur pour lequel aucune solution précédente n'est disponible. Ce mode, *a priori* moins performant que le mode de poursuite, trouve néanmoins un intérêt pour certaines applications telles que :

- l'initialisation de l'algorithme de poursuite,

- l'utilisation dans un contexte de fusion avec d'autres modalités de mesures telles que les centrales inertielles, où les solutions calculées sont filtrées à nouveau par un autre algorithme,

- dans certaines applications (ex : IoT pour Internet of Things) où le calcul est effectué à distance (dans un serveur distant) et pour lesquelles différentes contraintes (consommation, débit) ne permettent qu'un transfert ponctuel des mesures depuis les nœuds/tags capteurs à localiser.

L'invention concerne plus particulièrement, mais pas uniquement, le mode dit « single-epoch » en ce qu'il vise le calcul d'une solution de positionnement pour une époque donnée à l'instant k sans bénéfice d'une solution antérieure.
En mode dit *single epoch,* le calcul d'une solution de position ($X = [x, y, z, \delta]$) comprenant quatre inconnues peut donc être déterminé à partir de l'ensemble des mesures $\{\rho_i\}$ collectées à l'époque k en utilisant l'équation 2.1. Puisque le nombre de mesures *N* (typiquement, de 4 à 50) est généralement supérieur au nombre d'inconnues qui est au moins égal à 4, la solution doit être donc calculée au sens d'un critère de minimisation des erreurs affectant les mesures - encore appelés résidus - tel que les moindres carrés. Plus précisément, le nombre d'inconnus est égal à 4 lorsque tous les signaux reçus sont émis par des satellites de la même constellation (par exemple la constellation GPS). Si les signaux sont émis par des satellites d'au moins deux constellations (par exemple GPS et GALILEO) alors le nombre d'inconnues est égal à 5. De façon générale, le nombre d'inconnues est égal à 3+m, où m est le nombre de constellations de satellites envisagé.
La relation 2.4 donne l'équation des moindres carrés permettant de déterminer la solution de position X en recherchant la solution qui minimise une somme pondérée des résidus élevés au carré.

$$(x, y, z, \delta) = \arg \min_{x,y,z,\delta} \sum_{i=1}^{N} \omega_i \Delta_i(X)^2 \qquad \boldsymbol{2.4}$$

Les résidus $\Delta_i(X)$ correspondent à la difference entre la prediction de la mesure selon le modèle 2.1 pour la solution *X* d'une part, et la mesure $\rho_i$ réalisée d'autre part, où x,y,z et $\delta$ sont les solutions de l'équation 2.4.

$$\Delta_i(X) = \rho_i - (d_i(x, y, z) + \delta) \qquad 2.5$$

Et $\omega_i$ définit le coefficient de pondération associé à la mesure #i, c'est-à-dire « l'importance » que celle-ci aura dans le calcul de la solution.

Le terme $\omega_i$ définit le coefficient de pondération ou poids associé à chaque mesure $\rho_i$. Plus celui-ci est élevé, plus la mesure associée aura une contribution élevée sur la solution calculée. Un poids nul $\omega_i = 0$ signifie qu'une mesure n'a aucune influence sur la solution calculée et est donc équivalent à l'absence de cette mesure. Dans le cas où le poids est non nul, son importance est évaluée relativement aux poids des autres mesures, sa valeur seule ne permet donc pas de définir son importance.

Le même type d'équation que l'équation 2.5 peut être établie en utilisant les mesures de phase plutôt que celles de pseudo-distance, les deux grandeurs étant identiques dans leur modèle, à un coefficient près.

Le même type d'équation peut aussi être établi pour calculer une solution de vitesse ($v_x$, $v_y$, $v_z$, $\beta$), incluant les composantes de vitesse ainsi que $\beta$ la dérive d'horloge du récepteur, à partir des mesures de doppler.

Dans la suite du document, l'invention est décrite pour la recherche d'une solution de position à partir de mesures de pseudo-distances mais elle peut ainsi être étendue directement à la recherche d'une solution de position à partir de mesures de phase ou à la recherche d'une solution de vitesse à partir de mesures de Doppler en appliquant le même algorithme.

Il existe plusieurs stratégies de pondérations pour la résolution des moindres carrés donnée par l'équation 2.4. Une solution possible consiste à calculer le poids en fonction de l'erreur probable $\sigma_i$ associée à chaque mesure en utilisant le modèle de l'équation 2.6, c'est-à-dire l'inverse de la variance de l'erreur probable sur la mesure d'indice i.

$$\omega_i = \frac{1}{\sigma_i^2} \qquad 2.6$$

Cette stratégie de pondération trouve en effet des fondements théoriques (estimation Bayésienne), qui permettent de la justifier sous certaines hypothèses. Dans ce cas, l'erreur probable $\sigma_i$ est l'écart type associé à la distribution de l'erreur de la mesure $\rho_i$, c'est-à-dire la distribution du terme aléatoire $\varepsilon_i$ de l'équation 2.1. Outre sa justification théorique, cette approche permet de relier la valeur $\sigma_i$ exprimée en mètres, à des phénomènes physiques mesurables. Ainsi, la distribution des erreurs de mesure peut être établie empiriquement par des campagnes de test, ou à partir d'autres éléments connus (précision de positionnement des satellites, propagation dans l'ionosphère, bruit du récepteur etc.). Typiquement, les valeurs $\sigma_i$ sont comprises entre 1m et 20m, mais peuvent varier en fonction de l'intensité du signal reçu ou de l'élévation du satellite par exemple.

Les techniques reliant différentes métriques annexes (rapport signal à bruit C/N0, élévation du satellite etc.) à la précision supposée de la mesure sont appelées pondération stochastique.

Par exemple, la variance de l'erreur peut être obtenue au moyen du modèle empirique donné dans le document [1] et repris à l'équation 2.7.

$$\sigma_i^2 = \frac{1}{\sin^2 \theta_i} \left( \sigma_1^2 + \frac{\sigma_2^2}{\gamma_i} \right) \qquad 2.7$$

Dans laquelle $\theta_i$ et $\gamma_i$ représentent respectivement l'angle d'élévation ainsi que l'intensité du signal reçu du satellite SVi, et $\sigma_1^2$ et $\sigma_2^2$ sont deux termes empiriques.

D'autres modèles empiriques peuvent être utilisés en remplacement de celui donné ci-dessus.

Si ces formules empiriques sont largement utilisées, elles n'en demeurent pas moins difficiles à régler, et une modélisation plus fine de la distribution de chacune des mesures reçues permettrait une amélioration des performances. Cependant, cette modélisation plus fine peut s'avérer extrêmement complexe en pratique, tant le nombre de phénomènes en jeu sont nombreux (état des couches atmosphériques, type de récepteur, précision de positionnement du satellite, présence d'obstacles dans l'environnement du récepteur etc.) et difficiles à prédire.

Par ailleurs, afin de garantir l'optimalité, et donc une bonne précision, des solutions calculées, il est important que l'ensemble des mesures prises en compte pour établir cette solution soient conformes au modèle utilisé a priori, c'est-à-dire dans une plage d'erreur attendue.

Or, plusieurs phénomènes peuvent significativement dégrader la qualité d'une mesure tels que :

- un dysfonctionnement du satellite,

- une attaque - par exemple de type brouillage ou leurrage- à l'encontre des signaux GNSS,

- la présence d'obstacles (par exemple des bâtiments en environnement urbain) bloquant le trajet direct de l'onde, conduisant le récepteur à ne mesurer qu'un trajet réfléchi qui aura parcouru une distance potentiellement très supérieure à celle attendue.

Ces mesures biaisées doivent donc être détectées comme telles, et exclues du calcul de la solution ou bien se voir assigner un poids nul, ce qui est équivalent. On parle alors de détection de fautes.

Il existe donc un besoin pour une méthode de localisation qui permette de mieux prendre en compte les incertitudes liées aux modèles théoriques de calculs des coefficients de pondération lors de la résolution de la solution par les moindres carrés. Il existe aussi un besoin pour une méthode de localisation qui permette d'éliminer de façon fiable les mesures biaisées du calcul de la solution de positionnement.

Les schémas de surveillance d'intégrité existants, tels que la surveillance d'intégrité autonome du récepteur connue sous l'acronyme RAIM pour « Receiver Autonomous Integrity Monitoring », déterminent s'il y a une défaillance dans une mesure de satellite en examinant la cohérence d'un ensemble de mesures redondantes. Une façon de faire est d'utiliser la méthode de séparation de solution. La méthode de séparation de solution pour les récepteurs RAIM est basée sur le calcul de la différence entre une solution de navigation complète qui est rendue en utilisant tous les N satellites visibles et un ensemble de sous-solutions de navigation qui sont rendues en utilisant N-i satellites visibles. En calculant l'ensemble de sous-solutions de navigation, l'algorithme RAIM suppose qu'une seule défaillance de satellite se produit à la fois.

Cependant, avec l'introduction de nouvelles constellations (par exemple Galileo, BeiDou) et l'utilisation continue des constellations existantes (par exemple les systèmes de positionnement mondiaux (GPS et GLONASS), il est plus probable qu'il puisse y avoir plusieurs défaillances simultanées de satellite à un moment donné. De plus, les défaillances de constellations entières devront également être prises en compte par les futurs schémas de surveillance d'intégrité.

En réponse à la possibilité de plusieurs défaillances se produisant en même temps, la surveillance d'intégrité autonome avancée du récepteur ou ARAIM « Advanced Receiver Autonomous Integrity Monitoring » a été développée. La technologie ARAIM est basée sur la méthode de séparation de solution, mais elle a été modifiée pour prendre en compte l'apparition de plusieurs défaillances simultanées et les défaillances de constellation. Pour chaque défaillance à surveiller, une sous-solution de navigation qui n'inclut pas les mesures associées à la défaillance est créée. Par exemple, si deux défaillances simultanées simples doivent être surveillées, alors un ensemble de sous-solutions basées sur l'élimination de toutes les combinaisons possibles de deux satellites doit être créé.

Cependant, l'augmentation du nombre de satellites visibles et des probabilités plus élevées de défaillances simultanées (comme prévu avec les nouvelles constellations) peut considérablement augmenter le nombre de sous-solutions à créer. Cela a un impact important sur les exigences de calcul de l'algorithme, ce qui se traduit par des puces plus coûteuses pour l'implémentation des récepteurs.

De nombreuses techniques de détection et d'exclusion de fautes (*FDE, Fault detection and exclusion* en anglais) ont été développées, celles-ci peuvent être classées en deux catégories principales, selon que la faute est analysée dans l'espace des mesures *(Residual-Based RAIM, notées ici RB)* comme décrit dans [3] ou dans l'espace des solutions *(Solution-Separation RAIM, notées ici SS)* comme décrit dans [2].

Dans le cas des méthodes *RB*, une première solution $X_0$ est calculée en utilisant toutes les mesures, puis un test statistique est effectué sur l'ensemble des résidus $\Delta_i(X_0)$ afin de déterminer si une faute est présente parmi les mesures. En effet, si toutes les mesures respectent le modèle attendu (par exemple modèle Gaussien, d'un écart type donné) alors la somme des résidus au carré est donnée par la relation suivante 3.1

$$\chi^2 = \sum_{i=1}^{N} \Delta_i{}^2(X_0) \qquad \textbf{3.1}$$

La somme des résidus suit une loi du chi-2 et cette hypothèse peut être testée en comparant la valeur obtenue à un seuil T.

$$\chi^2 < T \qquad \textbf{3.2}$$

5

Dans le cas des méthodes SS, une première solution $X_0$ est calculée en utilisant toutes les mesures, ainsi que $N$ solutions $X_i$ basées chacune sur $N$-1 mesures en excluant le satellite $SV_i$. Ensuite, chacune des solutions est comparée (en norme) par rapport à la solution $X_0$,

$$\tau_i = |X_0 - X_i| \qquad \textbf{\textit{3.3}}$$

Si aucune d'elles ne s'écarte plus d'un certain seuil T prédéterminé,

$$\tau_i < T, i = 1 \dots N \qquad \textbf{\textit{3.4}}$$

alors cela signifie qu'aucune mesure ne comporte de faute.

Dans les deux cas, si le test est non concluant, cela signifie qu'il existe au moins une faute parmi les mesures.

Afin d'exclure la faute, on peut construire $N$ sous ensembles de $N$-1 mesures et recommencer l'opération. Si l'un des tests est satisfait, alors la totalité des mesures associées au sous-ensemble sont considérées comme valides et la solution calculée peut être retenue. Si en revanche aucun des tests n'est satisfait, l'opération est répétée en construisant des sous-ensembles de $N$-2 mesures qui seront ensuite testés individuellement, et ainsi de suite.

Il est à noter qu'à chaque itération correspondant à un nombre $h$ de fautes testées, le nombre $L_h$ de sous-ensembles à construire pour chaque hypothèse de nombre de fautes $h,$ est donné par la relation :

$$L_h < C_h^n = \frac{n!}{(n-h)!\,h!} \qquad \textbf{\textit{3.5}}$$

Ce nombre peut rapidement devenir considérable lorsque le nombre de fautes testées devient important.

Par exemple, un récepteur standard multi-constellations peut typiquement obtenir 40 mesures, et, en environnement urbain, le nombre de fautes peut fréquemment se situer entre 3 et 10, conduisant à des nombres de sous-ensembles à tester compris entre 9880 et 847660528 ce qui peut rapidement devenir prohibitif en cout de calcul.

Il est à noter que toutes ces approches ont en commun de reposer sur une décision (via un test statistique), celle d'inclure ou non certaines mesures, mais ne modifient pas les poids associés à chacune d'elles, sinon par un forçage à 0, ce qui est équivalent à une exclusion.

D'autres approches connues sont basées sur une modification des pondérations telles que la méthode proposée dans la référence [5].

Cette approche se distingue par l'assignation de coefficients de pondération non nuls à des mesures pourtant détectées comme étant affectées d'une faute, ici principalement causée par du multi-trajet. L'idée est de préserver un équilibre entre d'une part, la réduction du poids des mesures fautives dans le calcul de la solution et, d'autre part, la dégradation de la dilution géométrique de la précision causée par l'exclusion des mesures fautives.

La dilution géométrique de la précision concerne un problème d'imprécision des mesures due à des facteurs géométriques. Autrement dit, les positions relatives du récepteur et des satellites agissent de façon significative sur la précision de la position.

Par exemple, pour une précision de mesure identique, des satellites « plutôt alignés » dans le ciel conduiront à une moins bonne précision de positionnement que des satellites répartis de manière homogène dans le ciel.

Ce phénomène, appelé dilution géométrique de la précision ou simplement dilution de la précision peut être quantifié précisément à partir des positions même approximatives (>1km) du récepteur et des satellites. Il se représente souvent sous la forme de termes multiplicatifs dans les trois directions de l'espace, qui permettent de traduire l'erreur de mesure en erreur de position dans ces mêmes directions. Par exemple, une dilution horizontale (HDOP) de la précision de 2, signifie qu'une erreur de mesure de 1m (supposée identique pour l'ensemble des satellites) se traduit par une erreur de positionnement horizontale de 2m.

La méthode propose dans [5] consiste à :

- Détecter toutes les mesures fautives,

- Réduire itérativement le poids des mesures fautives jusqu'à ce que un nombre maximum d'itération est atteinte, *ou* la dilution géométrique de la précision, calculée en prenant en compte la nouvelle pondération, dépasse un certain seuil,

- Les mesures non fautives utilisent les formules classiques de l'état de l'art telles que celle de l'équation 2.7 par exemple.

Une autre approche proposée dans [8] [0175]s'intéresse au réglage des formules de pondération des mesures dans le cas de multi-trajets avec une notion d'apprentissage (sous la forme d'une régression linéaire des valeurs), cependant elle ne considère pas comme entrées pour le calcul des pondérations des informations conjointes (c.-a-d. reposant sur des calculs combinant plusieurs signaux, comme les résidus par exemple).

La référence [9] décrit l'utilisation d'un réseau de neurones convolutionnel (CNN) pour classifier les signaux GNSS selon trois catégories : vue directe (*line-of-sight,* LOS), non vue directe (*non-line of sight,* NLOS) et multi-trajets (*multipath,* MP). Cependant cet algorithme utilise comme entrées directement les sorties des corrélateurs du *ranging processor,* qui sont des données internes et généralement non accessibles à l'extérieur du récepteur, et n'utilise pas d'entrées conjointes, c'est-à-dire mettant en jeu plusieurs signaux issus de différents satellites simultanément. De plus, les sorties associées à chaque signal/satellite, sont de nature discrète.

En synthèse, il existe donc un besoin pour améliorer les méthodes de l'art antérieur en particulier dans la prise en compte plus précise des erreurs et incertitudes d'origines diverses qui impactent les mesures de radionavigation par satellite.

L'invention vise à proposer une nouvelle méthode de localisation qui a pour objectif d'améliorer la précision de positionnement ou de vitesse grâce à une meilleure pondération des mesures.

L'invention exploite un modèle d'intelligence artificielle qui est entrainé pour apprendre à déterminer, à partir de mesures conjointes réalisées sur l'ensemble des signaux reçus au sein d'une époque, un ensemble de coefficients de pondération permettant un calcul plus précis d'une information de localisation via une résolution au sens des moindres carrés.

L'invention a pour objet une méthode, mise en œuvre par ordinateur, d'apprentissage d'un modèle d'intelligence artificielle destiné à être utilisé pour déterminer une information de localisation d'un récepteur de radionavigation par satellite, la méthode comprenant les étapes de :

- Recevoir un ensemble de données d'apprentissage comprenant plusieurs ensembles de mesures de radionavigation par satellite associés chacun à une information de positionnement de référence,

- Déterminer, pour chaque ensemble de mesures, un ensemble de métriques comprenant au moins un ensemble de résidus calculés pour plusieurs sous-ensembles de mesures excluant chacun au moins une mesure de l'ensemble,

- Pour chaque ensemble de mesures,

    i. Déterminer un ensemble de coefficients de pondération de référence,

    ii. Entrainer le modèle d'intelligence artificielle à produire un ensemble de coefficients de pondération à partir des ensembles de métriques des données d'apprentissage, de manière à minimiser une distance entre lesdits coefficients de pondération et les coefficients de pondération de référence,

- les coefficients de pondération étant destinés à pondérer un ensemble de résidus, égaux à une différence entre une mesure et une information de positionnement prédite, lors d'un calcul de prédiction d'une information de positionnement par minimisation de la somme des résidus élevés au carré et pondérés par les coefficients de pondération.

Selon un aspect particulier de l'invention, chaque coefficient de pondération de référence est associé à un satellite et est fonction d'un résidu calculé comme la différence entre une pseudo-distance associée à une mesure de radionavigation émise par ce satellite et une pseudo-distance de référence calculée à partir de l'information de positionnement de référence.

Selon un aspect particulier de l'invention, l'information de positionnement de référence est fournie par un moyen de positionnement pris parmi : un système inertiel ou un système GNSS à haute précision ou une combinaison des deux systèmes.

Selon un aspect particulier de l'invention, le modèle d'intelligence artificielle est un réseau de neurones artificiels, par exemple un réseau de neurones récurrents.

Selon un aspect particulier de l'invention, ensemble de mesures des données d'apprentissage comprend en outre un ensemble d'indicateurs de qualité du signal reçu pour chaque mesure.

L'invention a aussi pour objet une méthode de localisation d'un récepteur de radionavigation par satellite comprenant les étapes de :

- Recevoir un ensemble de N mesures de radionavigation par satellite, N étant un entier au moins égal à 4,

- Déterminer, à partir des mesures reçues, un ensemble de métriques comprenant au moins un ensemble de résidus calculés pour plusieurs sous-ensembles de mesures comprenant chacun au plus N-1 mesures,

- Exécuter une phase d'inférence du modèle d'intelligence artificielle entrainé au moyen de la méthode d'apprentissage selon l'invention, à partir dudit ensemble de métriques pour déterminer un ensemble de coefficients de pondérations,

- Déterminer une information de localisation à partir desdites mesures de radionavigation par satellite et des coefficients de pondération en recherchant la valeur de l'information de localisation qui minimise la somme des résidus élevés au carré, associés aux N mesures, pondérés par les coefficients de pondération.

Selon un aspect particulier de l'invention, les mesures de radionavigation par satellite sont des mesures de pseudo-distance et l'information de localisation est une position d'un récepteur.

Selon un aspect particulier de l'invention, un résidu est défini par la différence entre une mesure de pseudo-distance et une prédiction de cette mesure.

Selon un aspect particulier de l'invention, les mesures de radionavigation par satellite sont des mesures de phases ou de Doppler et l'information de localisation est une position ou une vitesse d'un récepteur.

Selon un aspect particulier de l'invention, l'ensemble de métriques comprend en outre un ensemble d'indicateurs de qualité du signal reçu pour chaque mesure.

L'invention a aussi pour objet un récepteur de signaux de radionavigation par satellite comprenant un étage de réception de signaux GNSS, un étage de traitement en bande de base et un processeur de navigation configuré pour exécuter les étapes de la méthode de localisation selon l'invention.

L'invention a aussi pour objet un programme d'ordinateur comportant des instructions pour l'exécution de la méthode selon l'invention, lorsque le programme est exécuté par un processeur.

L'invention a aussi pour objet un support d'enregistrement lisible par un processeur sur lequel est enregistré un programme comportant des instructions pour l'exécution de la méthode selon l'invention, lorsque le programme est exécuté par un processeur.

D'autres caractéristiques et avantages de la présente invention apparaîtront mieux à la lecture de la description qui suit en relation aux dessins annexés suivants.

[Fig. 1] représente un schéma d'un récepteur de radionavigation par satellite selon l'art antérieur,

[Fig. 2] représente un schéma d'un récepteur de radionavigation par satellite selon l'invention,

[Fig. 3] représente un organigramme détaillant les étapes principales d'une méthode de détermination d'une information de localisation d'un récepteur GNSS selon un mode de réalisation de l'invention,

[Fig. 4] représente un organigramme détaillant les étapes d'une méthode d'apprentissage d'un modèle d'intelligence artificielle destiné à être utilisé pour déterminer une information de localisation, selon un mode de réalisation de l'invention,

[Fig. 5] représente un organigramme détaillant les étapes d'une méthode de prédiction d'une information de localisation à partir du modèle d'intelligence artificielle entrainé par la méthode de la figure 4, selon un mode de réalisation de l'invention,

[Fig. 6] représente une matrice de résidus destinée à alimenter un moteur d'intelligence artificielle selon un premier exemple de réalisation,

[Fig. 7] représente une matrice de résidus destinée à alimenter un moteur d'intelligence artificielle selon un second exemple de réalisation.

La description de l'invention est, par la suite, faite pour le cas d'une détermination de position à partir de mesures de pseudo-distances, mais l'invention s'applique de façon similaire pour déterminer une information de vitesse ou de temps à partir de mesures de pseudo-distances, de phases ou de Doppler.

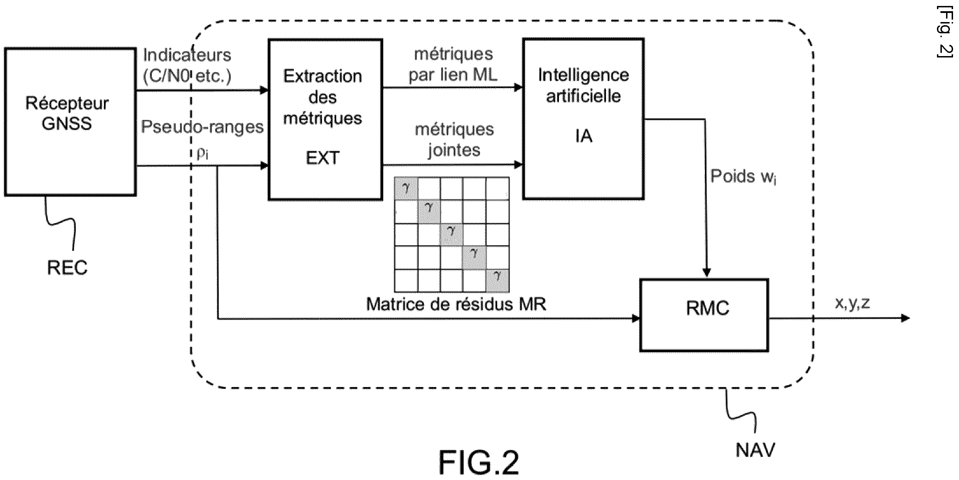

La figure 2 schématise l'architecture fonctionnelle d'un récepteur de signaux de radio-navigation par satellite selon un mode de réalisation de l'invention.

Le récepteur comporte un premier étage de réception REC qui comporte une antenne, un étage radiofréquence RF et un étage de traitement en bande de base BB similaires à ceux déjà décrits à la figure 1.

L'invention peut être implémentée dans un processeur numérique de navigation NAV, comme représenté à la figure 2. Alternativement, les mesures fournies par l'étage de réception REC peuvent être transmises à un serveur distant dans lequel est implémentée l'invention.

L'étage de réception REC est apte à recevoir différents signaux de radio-navigation émis par différents satellites émettant chacun sur une ou plusieurs fréquences et appartenant à une même constellation ou à des constellations différentes. Les signaux sont émis durant une époque.

L'étage de réception REC fournit en sortie des mesures de pseudo-distances $\rho_i$ (ou de phase ou de Doppler) ainsi que différents indicateurs de qualité de chaque signal reçu, par exemple un indicateur de rapport signal à bruit C/N0 ou un indicateur d'instant d'accrochage ou « lock time » en anglais.

Un premier module EXT d'extraction de métriques reçoit les mesures et les indicateurs et fournit en sortie un ensemble de métriques caractérisant les signaux.

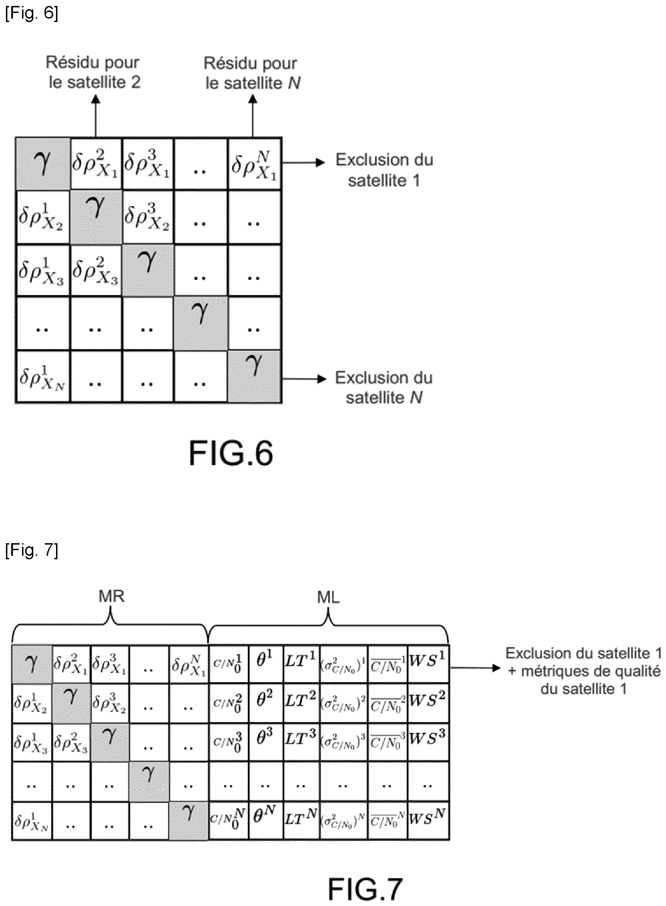

Cet ensemble de métriques comprend au moins un ensemble de métriques conjointes, c'est-à-dire des métriques calculées à partir de plusieurs signaux. Les métriques conjointes sont par exemple un ensemble de résidus organisés dans une matrice MR comme représentée à la figure 6, les résidus étant calculés à partir de chaque sous-ensemble de N-1 satellites parmi N satellites en visibilité du récepteur et pour lesquels des signaux ont été reçus.

Optionnellement, l'ensemble de métriques comprend également des métriques par lien qui correspondent ou sont calculées à partir des indicateurs de lien fournis par l'étage de réception REC.

Un deuxième module IA d'intelligence artificielle est configuré pour fournir en sortie un ensemble de coefficients de pondération $\omega_i$ pour chacune des mesures. Par exemple, le module IA est implémenté au moyen d'un réseau de neurones artificiel entrainé au moyen de techniques d'apprentissage machine.

Un troisième module RMC de résolution des moindres carrés détermine une solution de positionnement à partir des mesures de pseudo-distances fournies par l'étage de réception REC et des coefficients de pondération fournis par le module IA en appliquant l'équation 2.4.

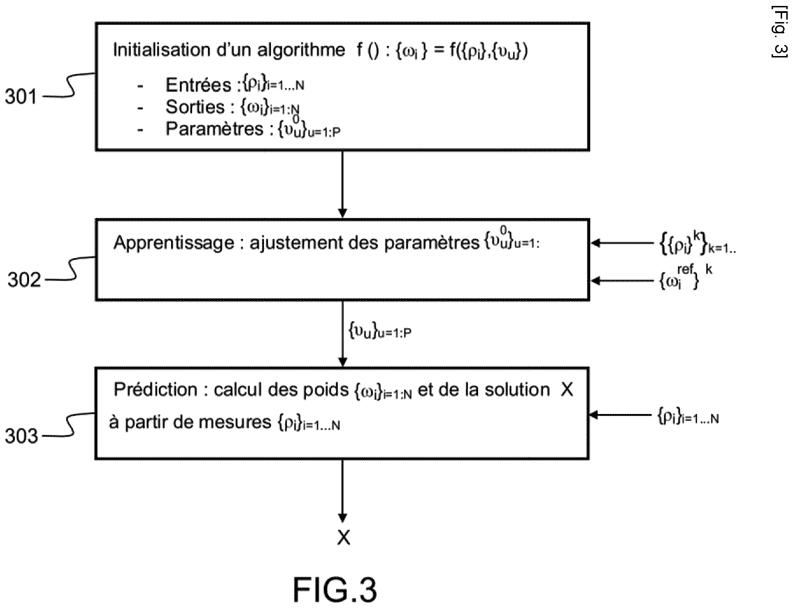

La figure 3 schématise, sur un organigramme, les étapes principales de l'invention.

A l'étape 301, le modèle d'intelligence artificielle utilisé est initialisé, en particulier ses paramètres $\{v_u^0\}_{u=1:P}$ sont initialisés en vue d'apprendre une fonction f qui permet de calculer les coefficients de pondération $\{\omega_i\}_{i=1:N}$ associés à des mesures $\{\rho_i\}_{i=1..N}$.

A l'étape 302, le modèle d'intelligence artificielle est entrainé afin d'ajuster ses paramètres pour apprendre à réaliser la fonction f. L'entrainement est réalisé sur un nombre K de jeux de mesures $\{\{\rho_i\}^k\}_{k=1..K}$ par exemple associés à k positions connues. L'entrainement est réalisé de manière que les coefficients de pondération obtenues soient le plus proche possible de coefficients de référence $\{\omega_i^{ref}\}^k$. Le nombre K de jeux de mesures utilisé est tel que K.N soit supérieur au nombre de paramètres P (K.N > P) et est par exemple compris entre 10000 et 10000000. N est le nombre de mesures réalisées à partir de signaux émis par des satellites différents.

Avantageusement, les coefficients de pondération de référence sont calculés en utilisant l'équation 2.6 à partir d'une solution de position de référence connue $X^{ref}$ qui est par exemple fournie par un récepteur à haute précision qui peut être muni d'une centrale inertielle ou tout autre moyen indépendant des signaux GNSS.

Les coefficients de pondération de référence correspondent à des résidus définis par l'équation 4.1

$$\Delta_i^{ref}(X^{ref}) = \rho_i - (d_i(x^{ref}, y^{ref}, z^{ref}) + \delta^{ref}) \qquad \textbf{4.1}$$

Les poids de référence sont calculés en utilisant un modèle empirique, par exemple celui donné à l'équation 2.7.

Les paramètres $\{v_u^0\}_{u=1:P}$ sont ajustés par exemple de manière à minimiser une fonction de cout C qui est fonction d'une distance entre les coefficients de pondération obtenus et les coefficients de pondération de référence.

La fonction de cout C est par exemple donnée par la relation 4.2 :

$$C(\{v_u\}) = \sum_{k=1}^{K} \sum_{i=1}^{N} \left\| \{\omega_i^{ref}\}^k - \{\omega_i\}^k \right\| \qquad \textbf{4.2}$$

A l'étape 303, le modèle d'intelligence artificielle entrainé à l'étape 302 est ensuite utilisé pour prédire, à partir de nouvelles mesures, un ensemble de coefficients de pondération qui sont utilisés pour calculer une solution de positionnement à partir de l'équation des moindres carrés 2.4.

On décrit à présent plus en détail chaque étape de l'invention.

Le modèle d'intelligence artificielle utilisé peut être un réseau de neurones artificiel, par exemple un réseau de neurones récurrents ou tout autre modèle qui peut être entrainé pour apprendre à exécuter une fonction particulière.

Selon un mode de réalisation particulier de l'invention, le modèle d'intelligence artificielle est un réseau de neurones récurrents ou LSTM-NN pour « Long Short Term Memory Neural Network ». Le réseau comporte, par exemple deux couches cachées de respectivement 893 et 517 neurones. La couche d'entrée comporte autant de neurones que de métriques fournies par le module d'extraction de métriques EXT et la couche de sortie comporte un nombre N de neurones égal au nombre de coefficients de pondération à générer qui est lui-même égal au nombre maximum de mesures associées à des satellites différents qu'un récepteur peut recevoir. Ce paramètre peut être défini a priori.

Les fonctions d'activation des couches du réseau de neurones sont par exemple, une fonction tangente hyperbolique tanh ou une fonction d'activation ReLU. Les paramètres du réseau de neurones, en particulier les coefficients synaptiques sont initialisés à une valeur prédéterminée, par exemple 0 ou 1 ou une valeur aléatoire entre 0 et 1.

Le nombre de couches (1 à 100), le nombre de neurones (5 à 1000 par couche) de même que le nombre de paramètres P = 1000 à 100 000 000 peut varier. La « fonction d'activation » de chaque couche peut être choisie parmi des exemples tels que ReLU, tanh, ou sigmoid par exemple. Le nombre de couches, de même que le nombre de neurones et le choix de la fonction d'activation peuvent eux même faire partie des paramètres pouvant être optimisés lors de l'étape d'apprentissage 302. D'autres types de réseaux peuvent également être utilisés tels que des réseaux de type totalement connectés « fully connected » ou convolutionnels « CNN » (convolutionnal-NN) ou encore des réseaux GRU (« Gate Recurrent Unit ») par exemple.

Les données d'entrée du réseau de neurones sont normalisées entre 0 et 1 en divisant chacune des valeurs par une valeur prédéterminée (exemple 10, 100 ou 1000) ou par la valeur maximale des valeurs calculées sur toutes les données d'entrée.

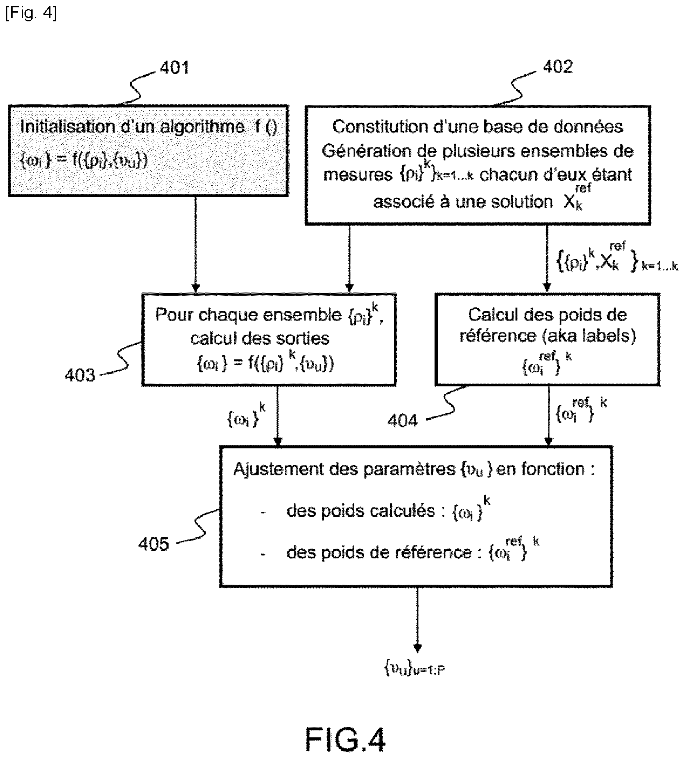

La figure 4 représente, sur un organigramme, les étapes de mise en œuvre d'une méthode d'apprentissage d'un modèle d'intelligence artificielle selon un mode de réalisation de l'invention.

La méthode reçoit en entrée les paramètres déterminés lors de la phase d'initialisation représentée par l'étape 401 sur la figure 4.

L'étape 402 consiste à générer une base de données d'apprentissage pour réaliser l'apprentissage du modèle. Les données d'apprentissage sont constituées de plusieurs ensembles de test, chaque ensemble étant constitué de plusieurs mesures de radionavigation par satellite et d'une solution de positionnement de référence associée $\left\{ \{\rho_i\}^k, X_k^{ref} \right\}_{k=1..K}$.

La base de données peut être construite en collectant des mesures $\{\rho_i\}^k$ réelles au moyen d'un récepteur et en mesurant la position de référence à partir d'un système très performant ( $x_k^{ref}, y_k^{ref}, z_k^{ref}$ ), par exemple un système inertiel ou un système GNSS à haute précision ou une combinaison des deux systèmes. Dans ce cas, le décalage d'horloge du récepteur (non fourni par le système de référence, car celui-ci est propre au récepteur utilisé pour la collecte) peut être calculé en utilisant la relation 5.1 (on omet l'indice *k* pour une meilleure lisibilité).

$$\delta^{ref} = \frac{1}{N} \sum_{i=1}^{N} \rho_i - d_i(x^{ref}, y^{ref}, z^{ref}) \qquad \textbf{5.1}$$

Selon une variante de réalisation, les données d'apprentissage comprennent en plus des mesures de pseudo-distances, d'autres métriques associées à chacun des signaux reçus tels que, par exemple, le rapport signal à bruit C/N0 ou la durée de verrouillage du signal.

Selon une autre variante de réalisation, la base de données d'apprentissage est générée par simulation.

Les données d'apprentissage sont organisées sous forme de métriques identiques à celle produites par le module d'extraction de métriques, c'est-à-dire une matrice de résidus complétée éventuellement par des métriques spécifiques à chaque lien.

A l'étape 403, pour chaque ensemble de mesures de la base de données d'apprentissage, une phase d'inférence du réseau de neurones est exécutée pour calculer les coefficients de pondération à partir des paramètres du réseau.

A l'étape 404, un ensemble de coefficients de pondération de référence sont déterminés. Avantageusement, ils sont calculés à partir de la position de référence et des mesures de références en utilisant, par exemple l'équation 2.6 ou une équation similaire.

Par exemple, les coefficients de pondération de référence peuvent être calculés au moyen de l'une des formules suivantes:

$$\omega_i^{\mathrm{ref}} = \frac{1}{\left(\Delta_i^{ref}\left(X^{ref}\right)\right)^2} = \frac{1}{\left(\rho_i - (d_i(x^{ref}, y^{ref}, z^{ref}) + \delta^{ref})\right)^2}$$

$$\omega_i^{\mathrm{ref}} = \frac{1}{\left|\Delta_i^{ref}(X^{ref})\right|},$$

$$\omega_i^{\mathrm{ref}} = \Delta_i^{ref}(X^{ref}),$$

A l'étape 405, le réseau de neurones est entrainé de sorte à ajuster ses paramètres $\{v_u\}$ en fonction :

- des coefficients de pondération calculés : $\{\omega_i\}^k$ ,

- des coefficients de pondération de référence : $\left\{\omega_i^{\mathrm{ref}}\right\}^k$ .

Plus précisément, l'ajustement des paramètres est par exemple réalisé au moyen de :

- une phase de propagation des données d'apprentissage dans le réseau de neurones depuis les entrées du réseau vers ses sorties pour calculer des coefficients de pondération $\{\omega_i\}^k$ ,
- un calcul d'erreur entre la sortie calculée et le résultat à obtenir via une fonction de cout,
- une phase de rétropropagation de l'erreur qui vise à ajuster les paramètres ou coefficients synaptiques pour chaque connexion entre deux neurones à l'aide d'un algorithme de rétropropagation qui vise à minimiser la fonction de cout. L'algorithme de rétropropagation est par exemple basé sur une descente de gradient ou tout autre algorithme équivalent.

La fonction de cout est une fonction de distance entre les coefficients de pondération calculés et les coefficients de pondération de référence de sorte à faire converger les coefficients de pondération calculés vers les coefficients de référence.

Par exemple, la fonction de cout suivante peut être utilisée en remplacement de celle donnée à l'équation 4.2 :

$$C(\{v_u\}) = \sum_{k=1}^{K} \sum_{i=1}^{N} \left\{ \frac{1}{\omega_i^{ref}} \right\}^k - \left\{ \frac{1}{\omega_i} \right\}^k \qquad \textbf{5.2}$$

Toute autre fonction de cout traduisant un écart entre les coefficients calculés par l'algorithme et les coefficients de référence peut être utilisée.

Une fois le modèle entrainé, il peut être utilisé pour prédire une information de positionnement.

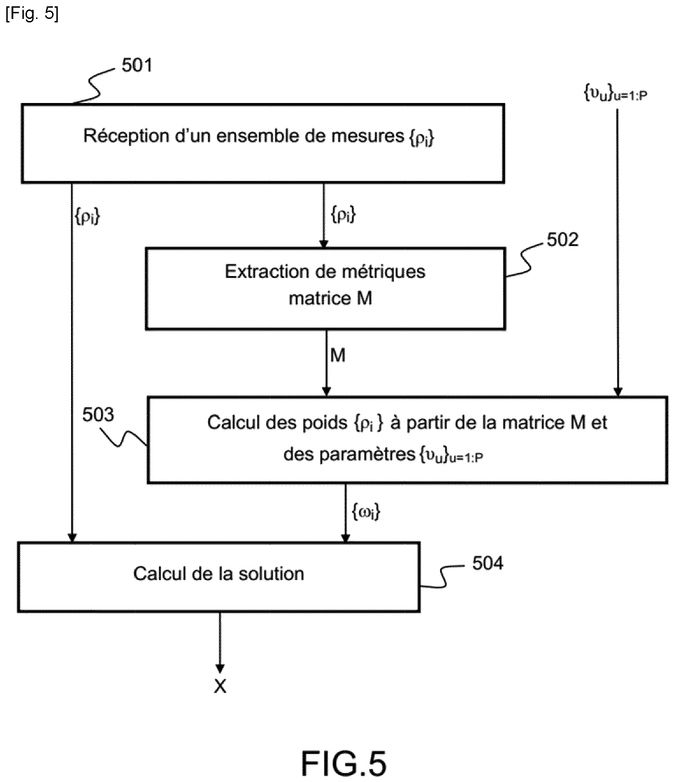

La figure 5 schématise les étapes de mise en œuvre d'une méthode de localisation selon un mode de réalisation de l'invention.

A l'étape 501, on reçoit un nouvel ensemble de mesures acquises par un récepteur de radio-navigation, par exemple un ensemble de mesures de pseudo-distances $\{\rho_i\}$ correspondant à une même époque GNSS. Le nombre N de mesures réalisées peut varier typiquement de l'ordre de 4 à 50 mesures.

Le récepteur peut recevoir des signaux satellites de différentes constellations (GPS, Galiléo Glonass, Beidou, Qzs etc.).

Le récepteur peut recevoir plusieurs signaux à des fréquences différentes (bandes L1, L2, L5, E1, E2 etc.) pour un même satellite. Ainsi, un seul satellite peut conduire à la réception de plusieurs signaux par exemple, si toutefois le récepteur dispose de cette capacité (récepteur multi-bandes).

Le récepteur peut produire, pour chaque signal reçu, plusieurs types de mesures parmi :

- Des mesures de pseudo-distance, de phase de la porteuse, des mesures Doppler.

- Des mesures de rapport signal à bruit C/N0, des mesures de temps d'accrochage du récepteur.

Les mesures de porteuses ou de Doppler peuvent être utilisées à la place des mesures de pseudo-distances. Dans ce cas la matrice de résidus est calculée sur les mesures de phase ou sur les mesures de Doppler.

Les mesures de porteuses ou de Doppler peuvent être utilisées en plus des mesures de pseudo-distances. Dans ce cas, plusieurs matrices de résidus peuvent être calculées et présentées en entrée de l'algorithme.

Dans une variante de réalisation, une sélection est opérée au sein des mesures. Certaines mesures peuvent être exclues d'emblée des traitements car supposées non-fiables. Un test préliminaire de validité peut s'appuyer, par exemple, sur une élévation $\theta_i$ minimale du satellite i : $\theta_i > \theta_{min}$, avec $\theta_{min}$ choisi entre 1 et 15 deg par exemple (i.e. la mesure est conservée si l'élévation du satellite est supérieure à la valeur minimale $\theta_{min}$) ; ou sur des critères de niveau de signal : $C/N0 > C/N0_{min}$.

A l'étape 502, on extrait des mesures un ensemble de métriques.

Dans un mode de réalisation, l'étape 502 consiste à construire une matrice de résidus M telle qu'illustrée à la figure 6.

Une telle matrice est de dimensions N par N, où N est le nombre de mesures associées à des satellites différents. Chaque ligne de la matrice correspond à un sous ensemble de mesures dans lequel on a exclu un satellite. On a donc N sous ensembles de N-1 mesures. Pour chaque sous ensemble on calcule N-1 résidus en utilisant les équations 2.4 et 2.5 et en utilisant un modèle empirique pour la détermination des coefficients de pondération. Sur chaque ligne de la matrice M on a donc N-1 valeurs de résidus $\delta_{Xi}^{j}$ avec j l'indice du satellite et Xi correspond à l'ensemble de mesures d'indice i. Les résidus $\delta_{Xi}^{j}$ sont calculés en se limitant aux N-1 mesures de l'ensemble Xi.

Le terme diagonal de la matrice peut être remplacé par une valeur arbitraire prise dans la plage [1 1000] par exemple ou peut correspondre au calcul d'un résidu pour la mesure exclue.

Afin que la matrice conserve une taille constante de dimensions *NxN* (ce qui facilite l'implémentation) si le nombre de mesures reçues est inférieur à N, alors tous les coefficients manquants sont affectés d'une valeur prédéfinie $\gamma$.

D'autres indicateurs peuvent être ajoutés à la matrice M tels que les indicateurs de qualité de chaque lien ($C/N0(i)$, $LT^i$), ou l'élévation du satellite $\theta_i$.

On peut également ajouter des indicateurs statistiques dérivant des indicateurs de qualité du lien. Par exemple, on peut adjoindre les statistiques empiriques telles que la valeur moyenne $\overline{C/N_0}(i)$ et l'écart type $\sigma_{C/N0}^2$ calculées sur une fenêtre glissante de M échantillons précédent l'époque courante, ainsi que le nombre d'échantillons utilisés pour calculer ces statistiques empiriques ($WS^i$) :

$$\overline{C/N_0}(i) \ = \frac{1}{N}\sum_{k=i-M}^{i} C/N0(k),$$

$$\sigma_{C/N0}^2 = \frac{1}{N}\sum_{k=i-M}^{i}\left(C/N0(k) - \overline{C/N_0}(i)\right)^2$$

Dans le cas ou d'autres informations relatives à chaque lien sont utilisées en plus des résidus, celles-ci peuvent être avantageusement ajoutées à la matrice de résidus comme illustré sur la figure 7 formant une matrice M de caractéristiques composée d'une matrice de résidus MR ainsi qu'une matrice de métrique par lien ML.

Dans tous les cas, les métriques déterminées à l'étape 502 doivent être de même nature que celles utilisées pour entrainer le réseau de neurones lors de la phase d'apprentissage.

L'utilisation de métriques conjointes telles que des résidus calculés pour différents sous-ensembles de mesures permet de fournir au modèle d'intelligence artificielle des informations plus complètes que les seules métriques de qualité de lien individuelles pour chaque mesure. A partir de l'ensemble de ces métriques, le modèle d'intelligence artificielle peut apprendre à identifier quelle mesure est susceptible d'être entachée d'une erreur et de l'affecter alors d'un coefficient de pondération de valeur plus faible que les autres mesures.

Si le nombre de métriques obtenues à l'étape 502, qui dépend du nombre de mesures réalisées à l'étape 501, est inférieur au nombre de métriques utilisé lors de la phase d'apprentissage (correspondant au nombre d'entrées du réseau de neurones), alors les entrées supplémentaires du réseau de neurones sont complétées par des valeurs nulles ou choisies arbitrairement.

A l'étape 503, le moteur d'intelligence artificielle entrainé lors de la phase d'apprentissage est exécuté pour déterminer un ensemble de coefficients de pondération à partir des métriques calculées à l'étape 502 qui lui sont fournies en entrée. Les coefficients de pondération obtenus permettent de pondérer avec des valeurs plus élevées les mesures identifiées comme fiables et avec des valeurs plus faibles les mesures identifiées comme erronées. La caractérisation des mesures comme fiable ou erronée est possible car le réseau de neurones a été entrainé pour générer les meilleurs coefficients possibles dans un nombre important de situations différentes couvertes par les données d'apprentissage.

En particulier les données d'apprentissage couvrent, avantageusement, de nombreux cas d'application dont des scénarii pour lesquels certaines mesures sont entachées d'erreurs.

Dans une variante de réalisation, le moteur d'intelligence artificielle peut être entraîné pour produire une sortie qui n'est pas directement un coefficient de pondération tel que défini dans l'équation 2.4, mais relié à celui-ci via une fonction $g$ comme par exemple :

$$\sigma_i = g(\omega_i) = \frac{1}{\sqrt{\omega_i}} \qquad \textbf{5.4}$$

Dans ce cas, lors de la phase d'entrainement, les coefficients de référence sont transformés de la même façon en utilisant la même fonction g.

A l'étape 504, une solution de positionnement est calculée à partir des coefficients de pondération déterminés à l'étape 503 par le réseau de neurones.

La solution est calculée à partir de l'équation 2.4 appliquée aux mesures $\{\rho_i\}$ et aux coefficients $\{\omega_i\}$ calculés à l'étape 503.

Différents algorithmes peuvent être utilisés pour résoudre l'équation 2.4, tels que les moindres carrés récursifs, l'algorithme de Levenberg-Marquardt ou la descente de gradient.

Lorsque les mesures sont issues de satellites appartenant à plusieurs constellations différentes, il faut estimer un décalage d'horloge par constellation. La définition de la solution devient donc $X = [x, y, z, \delta_1, \ldots, \delta_N]$ et le calcul du résidu de l'équation 2.1 devient l'équation 5.6:

$$\Delta_i(X) = \rho_i - (d_i(x,\ y,\ z) + \delta_C) \qquad \textbf{5.6}$$

L'équation 5.6 utilise le décalage approprié $\delta_C$, où C désigne la constellation de la mesure considérée.

Le calcul de la solution peut s'appuyer sur une solution précédente (époque $k$-1) qui peut être utilisée pour initialiser la résolution de l'équation 2.4 et ainsi accélérer le traitement.

Le calcul de la solution peut également être effectué par des algorithmes de filtrage (type filtre de Kalman), qui effectuent une mise à jour de la solution obtenue à l'époque $k$-1, (i.e $X_{k-1}$) pour calculer la solution à l'époque courante (i.e $X_k$).

Dans le cas où l'étape 503 ne produit pas des coefficients de pondération en sortie tels que définis à l'équation 2.4 (cf variante de l'étape 503 et équation 5.4), ceux-ci seront tout d'abord transformés par une fonction $g()$ avant d'être utilisés.

La méthode de localisation décrite à la figure 5 permet de fournir une information de positionnement comprenant au moins l'une des indications parmi une position, une vitesse ou une référence temporelle d'horloge.

La méthode de localisation peut être exécutée dans un processeur de navigation NAV d'un récepteur GNSS du type décrit à la figure 2.

Alternativement, la méthode de localisation peut être exécutée dans un serveur distant à partir de mesures réalisées par un récepteur GNSS puis transmises vers ce serveur.

De façon générale, les méthodes d'apprentissage et de localisation selon l'invention peuvent être mises en œuvre à l'aide de composants matériels et/ou logiciels. Les éléments logiciels peuvent être disponibles en tant que produit programme d'ordinateur sur un support lisible par ordinateur, support qui peut être électronique, magnétique, optique ou électromagnétique. Les éléments matériels peuvent être disponibles tous ou en partie, notamment en tant que circuits intégrés dédiés (ASIC) et/ou circuits intégrés configurables (FPGA) et/ou en tant que circuits neuronaux ou en tant que processeur de signal numérique DSP et/ou en tant que processeur graphique GPU, et/ou en tant que microcontrôleur et/ou en tant que processeur général par exemple.

Références

[1] P. Groves « Principles of GNSS, Inertial and multisensor integrated navigation systems 2nd edition » Artech House, 2013

*[2]* M. Joerger and B. Pervan « Fault detection and exclusion using solution separation and chi-squared ARAIM » IEEE TRANSACTIONS ON AEROSPACE AND ELECTRONIC SYSTEMS VOL. 52, NO. 2 APRIL 2016

[3] F. Haque, V. Dehghanian and A. O. Fapojuwo, "Fault Detection and Correction Using Observation Domain Optimization for GNSS Applications," 2022 IEEE International Conference on Wireless for Space and Extreme Environments (WiSEE), Winnipeg, MB, Canada, 2022, pp. 61-66,doi:10.1109/WiSEE49342.2022.9926799.

[4] K. Zhang and P. Papadimitratos, "Fast Multiple Fault Detection and Exclusion (FM-FDE) Algorithm for Standalone GNSS Receivers," in IEEE Open Journal of the Communications Society, vol. 2, pp. 217-234, 2021, doi:10.1109/OJCOMS.2021.3050333.

[5] A. Pirsiavash, A. Broumandan, G. Lachapelle and K. O'Keefe, "Detection and De-weighting of Multipath-affected Measurements in a GPS/Galileo Combined Solution," 2019 European Navigation Conference (ENC), Warsaw, Poland, 2019, pp. 1-11, doi: 10.1109/EURONAV.2019.8714191.

[6] Pirsiavash A, Broumandan A, Lachapelle G, O'Keefe K. GNSS Code Multipath Mitigation by Cascading Measurement Monitoring Techniques. Sensors (Basel). 2018 Jun 19;18(6):1967. doi: 10.3390/s18061967. PMID: 29921798; PMCID: PMC6022099

[7] Groves, P., & Jiang, Z. (2013). Height Aiding, C/N0 Weighting and Consistency Checking for GNSS NLOS and Multipath Mitigation in Urban Areas. The Journal of Navigation, 66(5), 653-669. doi:10.1017/S0373463313000350

[8] Daniel Medina, Kasia Gibson*, Ralf Ziebold , Pau Closas, « Determination of Pseudorange Error Models and Multipath Characterization under Signal-Degraded Scenarios"

[9] WO2022/237989

## Revendications

1. Méthode, mise en œuvre par ordinateur, d'apprentissage d'un modèle d'intelligence artificielle destiné à être utilisé pour déterminer une information de localisation d'un récepteur de radionavigation par satellite, la méthode comprenant les étapes de :

   - Recevoir (402) un ensemble de données d'apprentissage comprenant plusieurs ensembles de mesures de radionavigation par satellite associés chacun à une information de positionnement de référence,
   - Déterminer, pour chaque ensemble de mesures, un ensemble de métriques comprenant au moins un ensemble de résidus calculés pour plusieurs sous-ensembles de mesures excluant chacun au moins une mesure de l'ensemble,
   - Pour chaque ensemble de mesures,

     i. Déterminer (404) un ensemble de coefficients de pondération de référence,
     ii. Entrainer (403,405) le modèle d'intelligence artificielle à produire un ensemble de coefficients de pondération à partir des ensembles de métriques des données d'apprentissage, de manière à minimiser une distance entre lesdits coefficients de pondération et les coefficients de pondération de référence,

     - les coefficients de pondération étant destinés à pondérer un ensemble de résidus, égaux à une différence entre une mesure et une information de positionnement prédite, lors d'un calcul de prédiction d'une information de positionnement par minimisation de la somme des résidus élevés au carré et pondérés par les coefficients de pondération.

2. Méthode d'apprentissage d'un modèle d'intelligence artificielle selon la revendication 1 dans laquelle chaque coefficient de pondération de référence est associé à un satellite et est fonction d'un résidu calculé comme la différence entre une pseudo-distance associée à une mesure de radionavigation émise par ce satellite et une pseudo-distance de référence calculée à partir de l'information de positionnement de référence.

3. Méthode d'apprentissage d'un modèle d'intelligence artificielle selon l'une quelconque des revendications précédentes dans laquelle l'information de positionnement de référence est fournie par un moyen de positionnement pris parmi : un système inertiel ou un système GNSS à haute précision ou une combinaison des deux systèmes.

4. Méthode d'apprentissage d'un modèle d'intelligence artificielle selon l'une quelconque des revendications précédentes dans laquelle le modèle d'intelligence artificielle est un réseau de neurones artificiels, par exemple un réseau de neurones récurrents.

5. Méthode d'apprentissage d'un modèle d'intelligence artificielle selon l'une quelconque des revendications précédentes dans laquelle chaque ensemble de mesures des données d'apprentissage comprend en outre un ensemble d'indicateurs de qualité du signal reçu pour chaque mesure.

6. Méthode de localisation d'un récepteur de radionavigation par satellite comprenant les étapes de :

   - Recevoir (501) un ensemble de N mesures de radionavigation par satellite, N étant un entier au moins égal à 4,
   - Déterminer (502), à partir des mesures reçues, un ensemble de métriques comprenant au moins un ensemble de résidus calculés pour plusieurs sous-ensembles de mesures comprenant chacun au plus N-1 mesures,
   - Exécuter (503) une phase d'inférence du modèle d'intelligence artificielle entrainé au moyen de la méthode d'apprentissage selon l'une quelconque des revendications précédentes, à partir dudit ensemble de métriques pour déterminer un ensemble de coefficients de pondérations,
   - Déterminer (504) une information de localisation à partir desdites mesures de radionavigation par satellite et des coefficients de pondération en recherchant la valeur de l'information de localisation qui minimise la somme des résidus élevés au carré, associés aux N mesures, pondérés par les coefficients de pondération.

7. Méthode selon la revendication 6 dans laquelle les mesures de radionavigation par satellite sont des mesures de pseudo-distance et l'information de localisation est une position d'un récepteur.

8. Méthode selon la revendication 7 dans laquelle un résidu est défini par la différence entre une mesure de pseudo-distance et une prédiction de cette mesure.

9. Méthode selon la revendication 6 dans laquelle les mesures de radionavigation par satellite sont des mesures de phases ou de Doppler et l'information de localisation est une position ou une vitesse d'un récepteur.

10. Méthode selon l'une quelconque des revendications 6 à 9 dans laquelle l'ensemble de métriques comprend en outre un ensemble d'indicateurs de qualité du signal reçu pour chaque mesure.

11. Récepteur de signaux de radionavigation par satellite comprenant un étage de réception de signaux GNSS (RF), un étage de traitement en bande de base (BB) et un processeur de navigation (NAV) configuré pour exécuter les étapes de la méthode de localisation selon l'une quelconque des revendications 6 à 10.

12. Programme d'ordinateur comportant des instructions pour l'exécution de la méthode selon l'une quelconque des revendications 1 à 10, lorsque le programme est exécuté par un processeur.

13. Support d'enregistrement lisible par un processeur sur lequel est enregistré un programme comportant des instructions pour l'exécution de la méthode selon l'une quelconque des revendications 1 à 10, lorsque le programme est exécuté par un processeur.

**Patentansprüche**

1. Trainingsverfahren, durchgeführt von einem Computer, eines Modells für künstliche Intelligenz, das dazu bestimmt ist, verwendet zu werden, um Standortbestimmungsinformationen eines Funknavigationsempfängers über Satellit zu bestimmen, wobei das Verfahren die folgenden Schritte umfasst:

   - Empfangen (402) eines Satzes von Trainingsdaten, umfassend mehrere Funknavigations-Messungssätze, über Satellit, die jeweils mit Referenz-Positionierungsinformationen assoziiert sind,
   - Bestimmen, für jeder Messungssatz, eines Metrikensatzes, der mindestens einen für mehrere Unter-Messungssätze berechnete Rest-Satz umfasst, der jeweils mindestens eine Messung des Satzes ausschließt,
   - für jeder Messungssatz

i. Bestimmen (404) eines Referenz-Gewichtungskoeffizientensatzes,
ii. Trainieren (403,405) des Modells für künstliche Intelligenz, um ausgehend von den Metrikensätze der Trainingsdaten auf eine Weise einen Gewichtungskoeffizientensatz zu produzieren, um eine Distanz zwischen den Gewichtungskoeffizienten und den Referenz-Gewichtungskoeffizienten zu minimieren,

- wobei die Gewichtungskoeffizienten dazu bestimmt sind, bei einer Berechnung zur Vorhersage von Positionierungsinformationen einen Rest-Satz, der gleich einer Differenz zwischen einer Messung und vorhergesagten Positionierungsinformationen ist, durch Minimierung von quadrierten und durch die Gewichtungskoeffizienten gewichteten Reste zu gewichten.

2. Trainingsverfahren eines Modells für künstliche Intelligenz nach Anspruch 1, wobei jeder Referenz-Gewichtungskoeffizient mit einem Satelliten assoziiert ist und eine Funktion eines als Differenz zwischen einer Pseudo-Distanz, die mit einer Funknavigationsmessung assoziiert ist, die durch diesen Satelliten emittiert wird, und einer Referenz-Pseudo-Distanz, die ausgehend von Referenz-Positionierungsinformationen berechnet wird, berechneten Rests ist.

3. Trainingsverfahren eines Modells für künstliche Intelligenz nach einem der vorstehenden Ansprüche, wobei die Referenz-Positionierungsinformationen von einem Positionierungsmittel unter Folgenden bereitgestellt werden: einem Inertialsystem oder einem GNSS-Hochpräzisionssystem oder einer Kombination der zwei Systeme.

4. Trainingsverfahren eines Modells für künstliche Intelligenz nach einem der vorstehenden Ansprüche, wobei das Modell für künstliche Intelligenz ein Netzwerk künstlicher Neuronen ist, zum Beispiel ein Netzwerk rekurrenter Neuronen.

5. Trainingsverfahren eines Modells für künstliche Intelligenz nach einem der vorstehenden Ansprüche, wobei jeder Trainingsdaten-Messungssatz weiter einen Qualitätsangabesatz des für jede Messung empfangenen Signals umfasst.

6. Standortbestimmungsverfahren eines Funknavigationsempfängers über Satellit, umfassend die folgenden Schritte:

- Empfangen (501) einen Satz von N Funknavigationsmessungen über Satellit, wobei N eine ganze Zahl von mindestens gleich 4 ist,
- Bestimmen (502), ausgehend von den empfangenen Messungen, eines Metrikensatzes, der mindestens einen für mehrere Unter-Messungssätze berechnete Rest-Satz umfasst, das jeweils höchstens N-1 Messung umfasst,
- Ausführen (503) einer Inferenzphase des Modells für künstliche Intelligenz, das mittels des Trainingsverfahrens nach einem der vorstehenden Ansprüche trainiert wurde, ausgehend von dem Metrikensatz, zum Bestimmen eines Gewichtungskoeffizientensatzes,
- Bestimmen (504) von Standortbestimmungsinformationen ausgehend von den Funknavigationsmessungen über Satellit und den Gewichtungskoeffizienten, indem der Wert der Standortbestimmungsinformationen, der die Summe der quadrierten Reste minimiert, die mit N Messungen assoziiert sind, die durch die Gewichtungskoeffizienten gewichtet wurden, gesucht wird.

7. Verfahren nach Anspruch 6, wobei die Funknavigationsmessungen über Satellit Pseudo-Distanz-Messungen sind und die Standortbestimmungsinformationen eine Position eines Empfängers sind.

8. Verfahren nach Anspruch 7, wobei der Rest durch die Differenz zwischen einer Pseudo-Distanz-Messung und einer Vorhersage dieser Messung definiert wird.

9. Verfahren nach Anspruch 6, wobei die Funknavigationsmessungen über Satellit Phasen- oder Doppler-Messungen sind und die Standortbestimmungsinformationen eine Position oder eine Geschwindigkeit eines Empfängers sind.

10. Verfahren nach einem der Ansprüche 6 bis 9, wobei jeder Metrikensatz weiter einen Indikatorensatz der Qualität des für jede Messung empfangenen Signals umfasst.

11. Funknavigations-Signalempfänger über Satellit, umfassend eine Empfangsstufe für GNSS-Signale (HF), eine Basisband-Verarbeitungsstufe (BB) und einen Navigationsprozessor (NAV), konfiguriert zum Ausführen der Schritte des Standortbestimmungsverfahrens gemäß einem der Ansprüche 6 bis 10.

12. Computerprogramm, umfassend Anweisungen zur Ausführung des Verfahrens nach einem der Ansprüche 1 bis 10, wenn das Programm durch einen Prozessor ausgeführt wird.

13. Von einem Prozessor lesbarer Aufzeichnungsträger, auf dem ein Programm aufgezeichnet ist, umfassend Anweisungen zur Ausführung des Verfahrens nach einem der Ansprüche 1 bis 10, wenn das Programm durch einen Prozessor ausgeführt wird.

**Claims**

1. A computer-implemented method for training an artificial intelligence model intended to be used to determine localization information in relation to a satellite radionavigation receiver, the method comprising the following steps:

    - receiving (402) a set of training data comprising multiple sets of satellite radionavigation measurements each associated with reference positioning information,
    - determining, for each set of measurements, a set of metrics comprising at least one set of residuals computed for multiple subsets of measurements each excluding at least one measurement of the set,
    - for each set of measurements,

        i. determining (404) a set of reference weighting coefficients,
        ii. training (403, 405) the artificial intelligence model to produce a set of weighting coefficients based on the sets of metrics for the training data, so as to minimize a distance between said weighting coefficients and the reference weighting coefficients,

    - the weighting coefficients being intended to weight a set of residuals, equal to a difference between a measurement and predicted positioning information, when computing a prediction of positioning information by minimizing the sum of squared residuals weighted by the weighting coefficients.

2. The method for training an artificial intelligence model according to Claim 1, wherein each reference weighting coefficient is associated with a satellite and depends on a residual computed as the difference between a pseudorange associated with a radionavigation measurement transmitted by this satellite and a reference pseudorange computed based on the reference positioning information.

3. The method for training an artificial intelligence model according to either one of the preceding claims, wherein the reference positioning information is provided by a positioning means taken from among: an inertial system or a high-precision GNSS system or a combination of the two systems.

4. The method for training an artificial intelligence model according to any one of the preceding claims, wherein the artificial intelligence model is an artificial neural network, for example a recurrent neural network.

5. The method for training an artificial intelligence model according to any one of the preceding claims, wherein each set of measurements of the training data furthermore comprises a set of quality indicators of the received signal for each measurement.

6. The method for localizing a satellite radionavigation receiver, comprising the following steps:

    - receiving (501) a set of N satellite radionavigation measurements, N being an integer at least equal to 4,
    - determining (502), based on the received measurements, a set of metrics comprising at least one set of residuals computed for multiple subsets of measurements each comprising at most N-1 measurements,
    - carrying out (503) an inference phase on the artificial intelligence model trained by way of the training method according to any one of the preceding claims, based on said set of metrics, in order to determine a set of weighting coefficients,
    - determining (504) localization information based on said satellite radionavigation measurements and the weighting coefficients by searching for the value of the localization information that minimizes the sum of squared residuals, associated with the N measurements, weighted by the weighting coefficients.

7. The method according to Claim 6, wherein the satellite radionavigation measurements are pseudorange measurements and the localization information is a position of a receiver.

8. The method according to Claim 7, wherein a residual is defined by the difference between a pseudorange measurement and a prediction of this measurement.

9. The method according to Claim 6, wherein the satellite radionavigation measurements are phase measurements or Doppler measurements and the localization information is a position or a speed of a receiver.

10. The method according to any one of Claims 6 to 9, wherein the set of metrics furthermore comprises a set of quality indicators of the received signal for each measurement.

11. A satellite radionavigation signal receiver comprising a GNSS signal reception stage (RF), a baseband processing stage (BB) and a navigation processor (NAV) configured to carry out the steps of the localization method according to any one of Claims 6 to 10.

12. A computer program comprising instructions for carrying out the method according to any one of Claims 1 to 10 when the program is executed by a processor.

13. A processor-readable recording medium on which there is recorded a program comprising instructions for carrying out the method according to any one of Claims 1 to 10 when the program is executed by a processor.

[Fig. 1]

FIG.1

[Fig. 2]

FIG.2

[Fig. 3]

EP 4 451 017 B1

**301** — Initialisation d'un algorithme $f() : \{\omega_i\} = f(\{\rho_i\},\{\upsilon_u\})$

- Entrées : $\{\rho_i\}_{i=1...N}$
- Sorties : $\{\omega_i\}_{i=1:N}$
- Paramètres : $\{\upsilon_u^0\}_{u=1:P}$

**302** — Apprentissage : ajustement des paramètres $\{\upsilon_u^0\}_{u=1:}$

$\{\{\rho_i\}^k\}_{k=1..}$

$\{\omega_i^{ref}\}^k$

$\{\upsilon_u\}_{u=1:P}$

**303** — Prédiction : calcul des poids $\{\omega_i\}_{i=1:N}$ et de la solution $X$ à partir de mesures $\{\rho_i\}_{i=1...N}$

$\{\rho_i\}_{i=1...N}$

$X$

## FIG.3

[Fig. 4]

FIG.4

[Fig. 5]

**501**

Réception d'un ensemble de mesures $\{\rho_i\}$

$\{\upsilon_u\}_{u=1:P}$

$\{\rho_i\}$     $\{\rho_i\}$

**502**

Extraction de métriques
matrice M

M

**503**

Calcul des poids $\{\rho_i\}$ à partir de la matrice M et
des paramètres $\{\upsilon_u\}_{u=1:P}$

$\{\omega_i\}$

Calcul de la solution    **504**

X

FIG.5

[Fig. 6]

**FIG.6**

[Fig. 7]

**FIG.7**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2022237989 A

**Littérature non-brevet citée dans la description**

- **SUZUKI TARO et al.** NLOS Multipath Detection using Convolutional Neural Network. *proceedings of the 33rd International Technical Meeting of the Satellite Division of the Institute of Navigation (ION GNSS+ 2020), September 22-25, 2020*, 22 September 2020, 2989-3000
- **P. GROVES**. Principles of GNSS, Inertial and multisensor integrated navigation systems. Artech House, 2013
- **M. JOERGER** ; **B. PERVAN**. Fault detection and exclusion using solution separation and chi-squared ARAIM. *IEEE TRANSACTIONS ON AEROSPACE AND ELECTRONIC SYSTEMS*, April 2016, vol. 52 (2)
- **F. HAQUE** ; **V. DEHGHANIAN** ; **A. O. FAPOJUWO**. Fault Detection and Correction Using Observation Domain Optimization for GNSS Applications. *2022 IEEE International Conference on Wireless for Space and Extreme Environments (WiSEE), Winnipeg, MB, Canada*, 2022, 61-66
- **K. ZHANG** ; **P. PAPADIMITRATOS**. Fast Multiple Fault Detection and Exclusion (FM-FDE) Algorithm for Standalone GNSS Receivers. *IEEE Open Journal of the Communications Society*, 2021, vol. 2, 217-234

- **A. PIRSIAVASH** ; **A. BROUMANDAN** ; **G. LACHAPELLE** ; **O'KEEFE**. Detection and De-weighting of Multipath-affected Measurements in a GPS/Galileo Combined Solution. *2019 European Navigation Conference (ENC), Warsaw, Poland*, 2019, 1-11
- **PIRSIAVASH A** ; **BROUMANDAN A** ; **LACHAPELLE G** ; **O'KEEFE K**. GNSS Code Multipath Mitigation by Cascading Measurement Monitoring Techniques.. *Sensors (Basel).*, 19 June 2018, vol. 18 (6), 1967
- **GROVES, P.** ; **JIANG, Z.** Height Aiding, C/N0 Weighting and Consistency Checking for GNSS NLOS and Multipath Mitigation in Urban Areas.. *The Journal of Navigation*, 2013, vol. 66 (5), 653-669
- **DANIEL MEDINA** ; **KASIA GIBSON** ; **RALF ZIEBOLD** ; **PAU CLOSAS**. *Determination of Pseudorange Error Models and Multipath Characterization under Signal-Degraded Scenarios*